# EUROPEAN PATENT APPLICATION

(11) **EP 2 587 798 A1**
(43) Date of publication of application: **01.05.2013**
(21) Application number: 12183287.7
(22) Date of filing: 06.09.2012
(51) Int. Cl.: H04N 5/76, G11B 27/00, H04N 5/445, H04N 5/907, H04N 9/82

(54) **Content output apparatus and content output method**

(30) Priority: 31.10.2011 JP 2011239559
(71) Applicant: Kabushiki Kaisha Toshiba, Tokyo 105-8001 (JP)
(72) Inventor: Hamada, Tomo, Tokyo, 105-8001 (JP)
(74) Representative: HOFFMANN EITLE

(57) **Abstract**

According to one embodiment, a content output apparatus includes: a storage (112) configured to store therein a serial identification information piece for identifying a serial that is a group of broadcast content pieces received from a broadcast station, content identification information piece for identifying each of the broadcast content pieces, and a farthest position reached indicating, for each of the broadcast content pieces, a position closest to an end of the corresponding broadcast content piece within a replayed portion of the corresponding broadcast content piece by a user operation, in association with each other; and an output controller (103) configured to output the farthest position reached for each of the broadcast content pieces identified by the content identification information pieces stored in association with the serial identification information piece for identifying the serial that is selected in the storage (112) to a display.

## Description

### FIELD

Embodiments described herein relate generally to a content output apparatus and a content output method.

### BACKGROUND

Recently, as digital devices have become widely used, broadcast receivers such as a hard disk recorder have become more popularized, and much more video information can now be recorded and replayed, compared with a recording and replaying process performed by conventional video tape recorders (VTR). With such a broadcast receiver, because a user can set scheduled recording and the like with simple operations, a huge amount of program content can be stored in a storage. As a result, the user might not be sufficiently aware of program content the user himself/herself has recorded.

In response to this issue, various technologies have been suggested to enable a user to recognize stored program content. For example, a technology for the displaying recording and replaying status of content in the form of a list is disclosed. As another example, a technology for displaying a position at which a user stopped watching the content is disclosed.

However, in the conventional technologies, a user often cannot recognize how far the user has watched the program content, solely with the position at which the user stopped watching the program content or the replaying status. For example, assuming a user stopped replaying a piece of program content that the user has once watched to the end, the user will not be able to recognize if the user has watched the program content to the end even by being presented with the position at which the user stopped replaying the program content. Therefore, for a serial that is a group of multiple pieces of program content, the user would have trouble recognizing how far the user has watched the program content.

The present invention is made in consideration of the above, and an object of the present invention is to provide a content output apparatus and a content output method for allowing a user to easily recognize how far the user has watched a piece of program content belonging to a serial.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram illustrating a main signal processing system of a television display apparatus according to an embodiment;
FIG. 2 is an exemplary schematic illustrating a software configuration realized when a controller executes a display application in the embodiment;
FIG. 3 is an exemplary schematic illustrating a table structure in a recorded content information storage in the embodiment;
FIG. 4 is an exemplary schematic illustrating a table structure in a serial replay information storage in the embodiment;
FIG. 5 is an exemplary schematic illustrating transition of screens in the television display apparatus in the embodiment;
FIG. 6 is an exemplary schematic illustrating an example of a screen of past program listings in the embodiment;
FIG. 7 is an exemplary schematic illustrating an example of a designated program replay screen displayed over the past program listings in the embodiment;
FIG. 8 is an exemplary schematic illustrating an example of a screen of a serial replay list in the embodiment;
FIG. 9 is an exemplary schematic illustrating an example of a screen of current electrical program listings in the embodiment;
FIG. 10 is an exemplary schematic illustrating an example of a designated program scheduling screen displayed over the electrical program listings in the embodiment; and
FIG. 11 is an exemplary flowchart illustrating a process from displaying the serial replay list to replaying the program content in the television display apparatus in the embodiment.

### SUMMARY

To overcome the problems and achieve the object mentioned above, according to an embodiment, a content output apparatus comprises: a storage configured to store therein a serial identification information piece for identifying a serial that is a group of broadcast content pieces received from a broadcast station, content identification information piece for identifying each of the broadcast content pieces, and a farthest position reached indicating, for each of the broadcast content pieces, a position closest to an end of the corresponding broadcast content piece within a replayed portion of the corresponding broadcast content piece by a user operation, in association with each other; and an output controller configured to output the farthest position reached for each of the broadcast content pieces identified by the content identification information pieces stored in association with the serial identification information piece for identifying the serial that is selected in the storage to a display.

According to another embodiment of the invention, a content output method comprises: storing therein a serial identification information piece for identifying a serial that is a group of broadcast content pieces received from a broadcast station, content identification information piece for identifying each of the broadcast content pieces, and a farthest position reached indicating, for each of the broadcast content pieces, a position closest to an end of the corresponding broadcast content piece within a replayed portion of the corresponding broadcast content piece by a user operation, in association with each other; and outputting the farthest position reached for each of the broadcast content pieces identified by the content identification information pieces stored in association with the serial identification information piece for identifying the serial that is selected to a display.

### DETAILED DESCRIPTION

In an example explained below, a content output apparatus and a content output method according to an embodiment is applied to a television display apparatus. Although the content output apparatus is applied to a television display apparatus in the embodiment explained below, embodiments in which the content output apparatus and the content output method are applied to various devices such as program content recorders, e. g. , a digital versatile disk (DVD) recorder, are still possible.

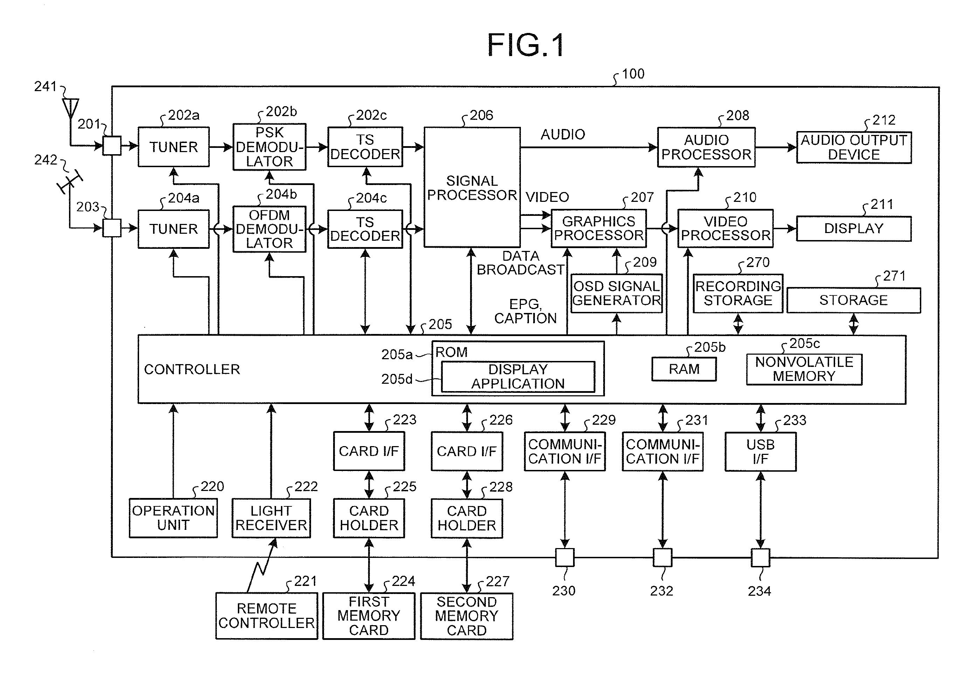

A hardware configuration of a television display apparatus 100 according to the embodiment will now be explained. FIG. 1 is a block diagram illustrating a main signal processing system of the television display apparatus 100 according to the embodiment.

A satellite digital television broadcast signal received by an antenna 241 for receiving a broadcast satellite (BS)/communication satellite (CS) digital broadcasts is supplied to a tuner 202a that is used for satellite digital broadcasts via an input terminal 201.

The tuner 202a selects a broadcast signal on a desired channel based on a control signal received from a controller 205, and outputs the broadcast signal thus selected to a phase-shift keying (PSK) demodulator 202b.

The PSK demodulator 202b demodulates the broadcast signal selected by the tuner 202a, based on a control signal received from the controller 205, to obtain a transport stream (TS) containing a desired program, and outputs the transport stream to a TS decoder 202c.

The TS decoder 202c applies a TS decoding process to the TS-multiplexed signal based on a control signal received from the controller 205, and outputs a packetized elementary stream (PES), obtained by depacketizing a digital video signal and an audio signal of the desired program, to a system target decoder (STD) buffer (not illustrated) in a signal processor 206.

The TS decoder 202c outputs section information transmitted via digital broadcasting to a section processor (not illustrated) in the signal processor 206.

A digital terrestrial television broadcast signal received by an antenna 242 for receiving terrestrial broadcasts is supplied to a tuner 204a that is used for digital terrestrial broadcasts via an input terminal 203.

The tuner 204a selects a broadcast signal on a desired channel based on a control signal received from the controller 205, and outputs the broadcast signal thus selected to an orthogonal frequency-division multiplexing (OFDM) demodulator 204b.

The OFDM demodulator 204b demodulates the broadcast signal selected by the tuner 204a based on a control signal received from the controller 205, to obtain a transport stream containing a desired program, and outputs the transport stream to a TS decoder 204c.

The TS decoder 204c applies a TS decoding process to the TS-multiplexed signal based on a control signal received from the controller 205, and outputs a PES obtained by depacketizing a digital video signal and an audio signal of the desired program to the STD buffer in the signal processor 206.

The TS decoder 204c outputs section information transmitted via digital broadcasting to the section processor in the signal processor 206.

When the television is to be watched, the signal processor 206 selectively applies predetermined digital signal processes to the digital video signal and the digital audio signal supplied from each of the TS decoder 202c and the TS decoder 204c, and outputs the results to a graphics processor 207 and an audio processor 208, respectively. When a program is to be recorded, the signal processor 206 selectively applies predetermined digital signal processes to the digital video signal and the digital audio signal supplied from each of the TS decoder 202c and the TS decoder 204c, and stores the signals applied with the processes in a recording storage (e.g., a hard disk drive (HDD)) 270 via the controller 205. In this manner, program content broadcasted by a broadcast station can be stored.

When a recorded program is to be replayed, the signal processor 206 applies predetermined digital signal processes to the program content read from the recording storage (e.g., HDD) 270 via the controller 205, and outputs the results to the graphics processor 207 and the audio processor 208.

The controller 205 receives various types of data required to obtain a program (e.g., key information used in B-CAS descrambling), electronic program guide (EPG) information, program attribute information (e.g., the genre of the program), caption information (service information (SI) or program specific information (PSI)), and the like from the signal processor 206.

To display an EPG and a caption, the controller 205 performs an image generating process to the information thus received, and outputs image information thus generated to the graphics processor 207.

The controller 205 has a function of controlling recording a program and a function of scheduling recording of a program. To receive a program recording schedule, the controller 205 displays the EPG information onto a display 211, and, in response to a user input made via an operation unit 220 or a remote controller 221, sets a schedule to a storage 271. This operation is realized by a light receiver 222 receiving an operation signal from the remote controller 221.

To record the scheduled program at specified time based on the schedule set in the storage 271, the controller 205 controls the tuners 202a and 204a, the PSK demodulator 202b, the OFDM demodulator 204b, the TS decoders 202c and 204c, and the signal processor 206.

The section processor outputs various types of data required to obtain the program, the EPG information, the program attribute information (e.g., the genre of the program), the caption information (SI or PSI), and the like to the controller 205, from the section information received from the TS decoder 202c (204c).

The graphics processor 207 has a function of synthesizing (1) a digital video signal supplied from an audio/video (AV) decoder (not illustrated) in the signal processor 206, (2) an on-screen display (OSD) signal generated by an OSD signal generator 209, (3) image data received via data broadcasting, and (4) the EPG and the caption signal generated by the controller 205, and outputs the result to a video processor 210.

The graphics processor 207 also performs, when a caption is to be displayed for a broadcast with a caption, a process of superimposing the caption information on the video signal, using the caption information generated under the control of the controller 205.

The digital video signal output from the graphics processor 207 is supplied to the video processor 210. The video processor 210 converts the digital video signal thus received into an analog video signal in a format that can be displayed by the display 211, outputs the analog video signal to the display 211, and displays the video onto a display screen of the display 211.

The audio processor 208 converts the received digital audio signal into an analog audio signal in a format that can be replayed by an audio output device 212, and outputs the analog audio signal to the audio output device 212 so that the audio is replayed.

The controller 205 comprises a read-only memory (ROM) 205a, a random access memory (RAM) 205b providing a working area for the CPU, and a nonvolatile memory 205c storing therein various configuration information, control information, and the like, and controls the entire television display apparatus 100.

The controller 205 is also connected to a card holder 225 into which a first memory card 224 can be inserted, via a card interface (I/F) 223. In this manner, the controller 205 can transmit information via the first memory card 224 inserted in the card holder 225 and the card I/F 223.

The controller 205 is also connected to a card holder 228 into which a second memory card 227 can be inserted, via a card I/F 226. In this manner, the controller 205 can transmit information via the second memory card 227 inserted in the card holder 228 and the card I/F 226.

The controller 205 is also connected to a first local area network (LAN) connector 230 via a communication I/F 229. In this manner, the controller 205 can transmit information to a LAN-compatible device (e.g., an external HDD) that is connected to the first LAN connector 230 via the communication I/F 229.

The controller 205 is also connected to a second LAN connector 232 via a communication I/F 231. In this manner, the controller 205 can transmit information to various LAN-compatible devices connected to the second LAN connector 232 via the communication I/F 231.

The controller 205 is also connected to a universal serial bus (USB) connector 234 via a USB I/F 233. In this manner, the controller 205 can transmit information to various devices connected to the USB connector 234 via the USB I/F 233.

Although only the tuners 202a and 204a are illustrated in FIG. 1, the television display apparatus 100 according to the embodiment may include more tuners (for example, six tuners in total). The television display apparatus 100 can simultaneously record programs broadcasted by broadcast stations up to the number equal to the number of tuners.

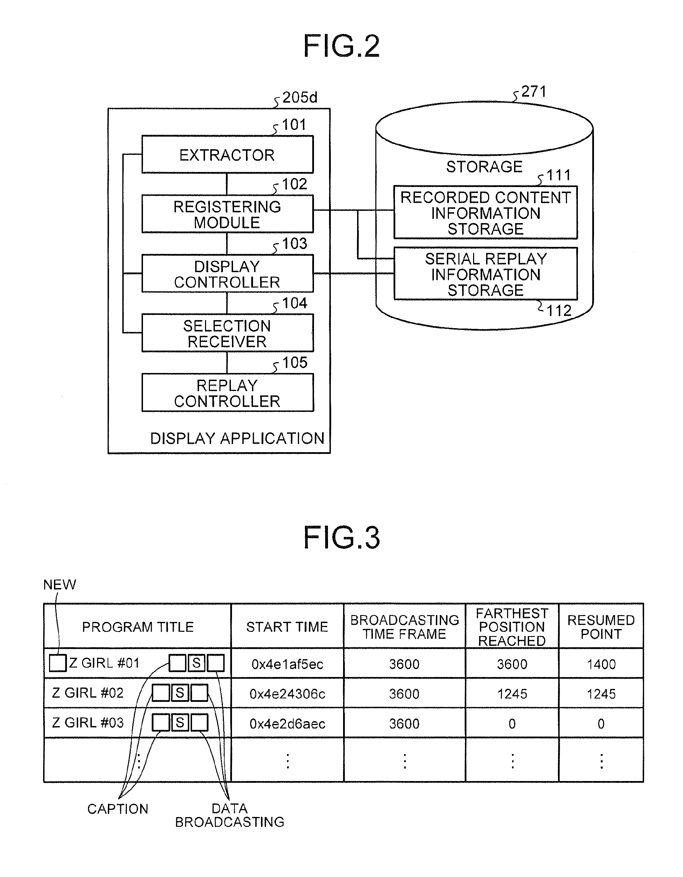

Explained below is a process performed when a display application 205d for outputting program content to the display 211 is executed, among the control programs stored in the ROM 205a. FIG. 2 is a schematic illustrating a software configuration realized when the controller 205 executes the display application 205d. FIG. 2 also illustrates an internal configuration of the storage 271.

The storage 271 comprises a recorded content information storage 111 and a serial replay information storage 112.

The storage 271 also stores therein electrical program listings obtained from an external server managing and distributing EPGs, or from television (TV) broadcasts. Specifically, electrical program listings for a TV, a cable television (CATV), CS broadcasts, and BS broadcasts are obtained from a server of a service provider connected to a network, such as the Internet, or those broadcasted by TV broadcasting are received via an antenna or a cable (not illustrated). The electrical program listings are stored in the storage 271.

The electrical program listings after the broadcasting is completed are not deleted from the storage 271, but stored in the storage 271 as past program listings so that these listings can be used in referring program content broadcasted by broadcast stations and simultaneously recorded by a plurality of tuners.

The television display apparatus 100 according to the embodiment is capable of not only simultaneous recording of program content but also scheduled recording of program content in response to a user operation.

The recorded content information storage 111 stores therein information related to each piece of recorded content stored in the recording storage 270. FIG. 3 is a schematic illustrating a table structure in the recorded content information storage 111. As illustrated in FIG. 3, the recorded content information storage 111 stores therein a program title, a start time, a broadcast time frame, a farthest position reached, and a resumed point, in an associated manner.

Recorded content stored in the recording storage 270 is program content received from a broadcast station. The program title represents the program title of the program content. The start time represents the time of the day at which the program content is started being broadcasted. In the embodiment, the Coordinated Universal Time (UTC) format is used for the start time. However, other formats may also be used. The broadcast time frame is the total length of time during which the program content is broadcasted.

The farthest position reached indicates a replayed position that is closest to the end of the program content, within a range in which the program content is replayed (watched) by a user operation. The farthest position reached is set for each piece of program content.

In the example illustrated in FIG. 3, the row with a program title "Z Girl #1" indicates that this piece of program content has been replayed to the end, because the broadcast time frame is set to "3600", and the farthest position reached is set to "3600". However, if the user has watched program content multiple times and stopped the program content halfway to the end, the point thus stopped (for example, "1400") is recorded as the resumed point. In other words, in the conventional approach in which the resumed point is displayed, the user cannot recognize whether the user has watched the program content to the end. In particular, when an enormous amount of program content is recorded, the user will not be able to recognize how much of the program content the user has watched. Therefore, in the embodiment, the farthest position reached is presented to the user.

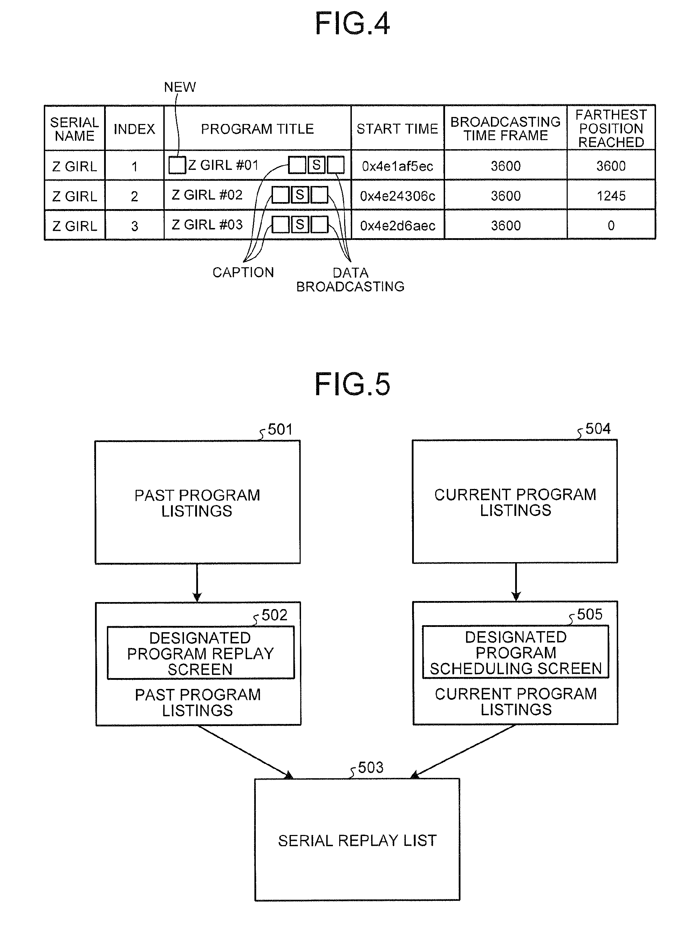

The serial replay information storage 112 stores therein information of each piece of program content belonging to a serial. FIG. 4 is a schematic illustrating a table structure in the serial replay information storage 112. As illustrated in FIG. 3, the serial replay information storage 112 stores therein a serial name, an index, the program title, the start time, the broadcast time frame, and the farthest position reached, in an associated manner. In the embodiment, a combination of the serial name and the index is used as a main key.

The serial name indicates the name of a serial that is a group of plural pieces of program content received from a broadcast station. The index is a number for identifying each piece of program content included in the serial. In the embodiment, an episode number of the program content is set to the index.

Referring back to FIG. 2, the display application stores therein an extractor 101, a registering module 102, a display controller 103, a selection receiver 104, and a replay controller 105 in an associated manner.

The display controller 103 controls to display data onto the display 211.

The selection receiver 104 receives a selection or an operation made by a user, based on operation information received from the remote controller 221.

Explained below is transition of screens controlled to be displayed by the display controller 103 based on a selection or an operation received by the selection receiver 104. FIG. 5 is a schematic illustrating the transition of screens in the television display apparatus 100.

As illustrated in FIG. 5, if the selection receiver 104 receives a predetermined operation after the display controller 103 displays past program listings 501, the display controller 103 displays a designated program replay screen 502. If the selection receiver 104 then receives an operation for displaying a serial replay list 503, the display controller 103 controls to display a serial replay list 503.

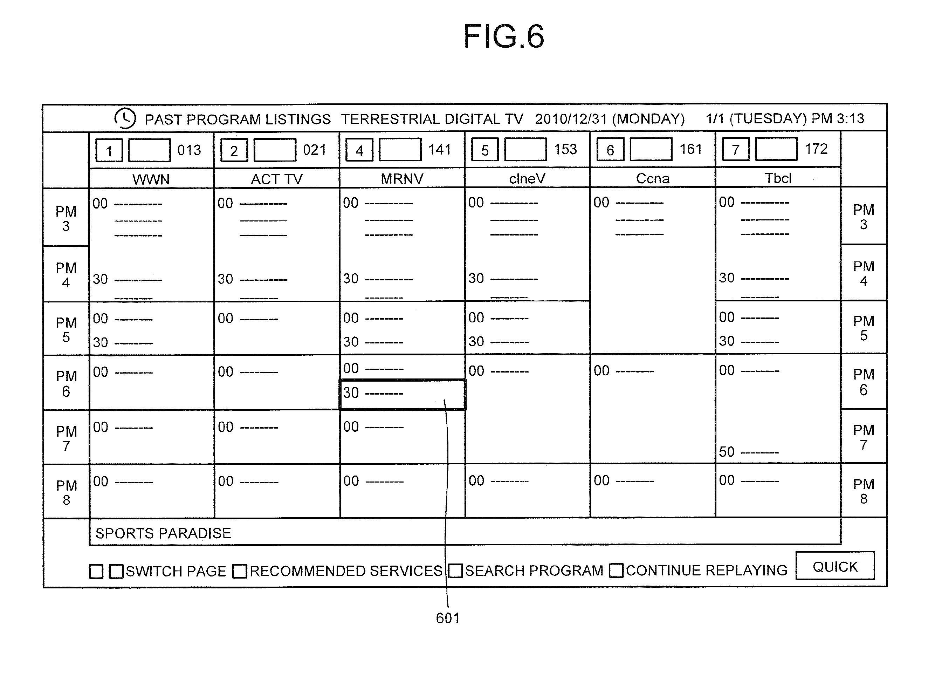

FIG. 6 is a schematic illustrating an example of a screen of the past program listings. In the embodiment, the information related to programs broadcasted in the past is stored in the storage 271. When the selection receiver 104 receives an operation for displaying the past program listings, the past program listings is displayed by the display controller 103. At this time, the display controller 103 displays program content 601 that is a target of focus in a highlighted frame, as illustrated in FIG. 6, in the past program listings.

When the selection receiver 104 receives a selection of program content from the past program listings, the display controller 103 displays a designated program replay screen.

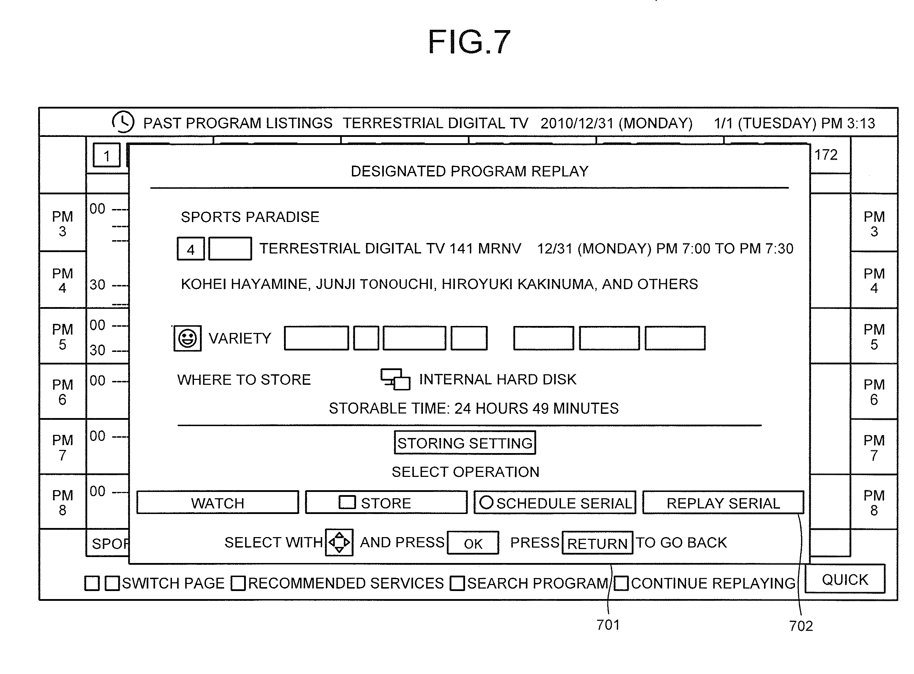

FIG. 7 is a schematic illustrating an example of a designated program replay screen 701 displayed over the past program listings. The designated program replay screen 701 illustrated in FIG. 7 displays detailed information of the selected program content, and buttons such as "watch", "store", "schedule serial", and " replay serial". By allowing the selection receiver 104 to receive a pressing operation on these buttons, the television display apparatus 100 performs an operation corresponding to the button. For example, if the selection receiver 104 receives a pressing operation of a "replay serial" button 702, the display controller 103 controls to display a serial replay list.

When the "replay serial" button is pressed, the extractor 101 extracts the name of the serial (hereinafter, simply referred to as a serial name) that includes program content designated in designated program replay screen 701 from the program content. The display controller 103 then reads the information of the program content associated with the serial name thus extracted from the serial replay information storage 112, and displays a serial replay list indicating the farthest position reached for each piece of program content belonging to the serial onto the display 211.

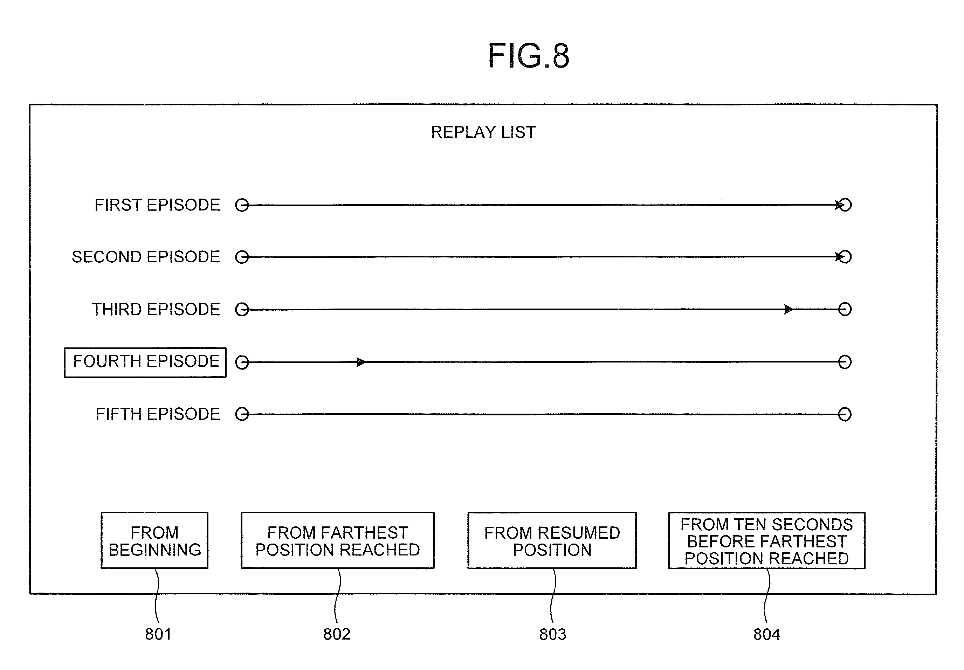

FIG. 8 is a schematic illustrating an example of a screen of the serial replay list. As illustrated in FIG. 8, in the serial replay list, an "episode number" for identifying specific program content and an "arrow" indicating the farthest position reached are displayed for each piece of program content included in the serial. A "from beginning" button 801, a "from farthest position reached" button 802, a "from resumed position" button 803, and a "from ten seconds before farthest position reached" button 804 are arranged in the serial replay list.

In the serial replay list screen according to the embodiment, because the farthest position reached is displayed for each piece of program content belonging to the serial, a user can recognize how much of the serial the user has watched.

The selection receiver 104 receives a selection of program content to be replayed from the list of program content having the farthest position reached displayed by the display controller 103. The selection receiver 104 then receives a pressing operation (selection) of one of the buttons 801 to 804.

The replay controller 105 reads program content whose selection is received by the selection receiver 104 from the recording storage 270, and replays the program content from a position corresponding to the pressed button. The replay controller 105 according to the embodiment starts replaying the program content from one of the beginning position of the program content, the farthest position reached, the resumed point at which the replay is stopped by a user operation, and ten seconds before the farthest position reached depending on the pressed button. In the embodiment, an example of ten seconds is presented as an example of a given time before the farthest position reached. However, such time is not limited to ten seconds, and is specified with time suitable for reminding a user of the program content.

Referring back to FIG. 5, if the selection receiver 104 receives a predetermined operation while a current program listings 504 is displayed by the display controller 103, the display controller 103 displays a designated program scheduling screen 505. If the selection receiver 104 receives an operation for displaying a serial replay list 503, the display controller 103 controls to display the serial replay list 503.

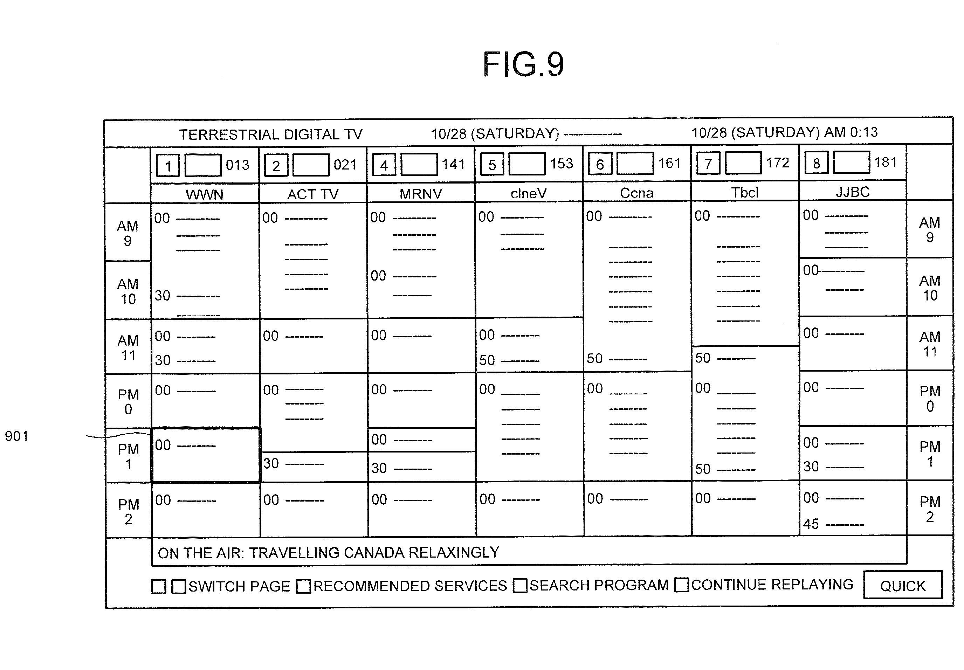

FIG. 9 is a schematic illustrating an example of a screen of the current electrical program listings. In the embodiment, if the selection receiver 104 receives an operation for displaying the electrical program listings, the display controller 103 displays the current electrical program listings read from the storage 271. As illustrated in FIG. 9, in the electrical program listings, program content 901 that is a target of focus is displayed in a highlighted frame.

If the selection receiver 104 receives a selection of program content from the electrical program listings, the display controller 103 displays the designated program scheduling screen.

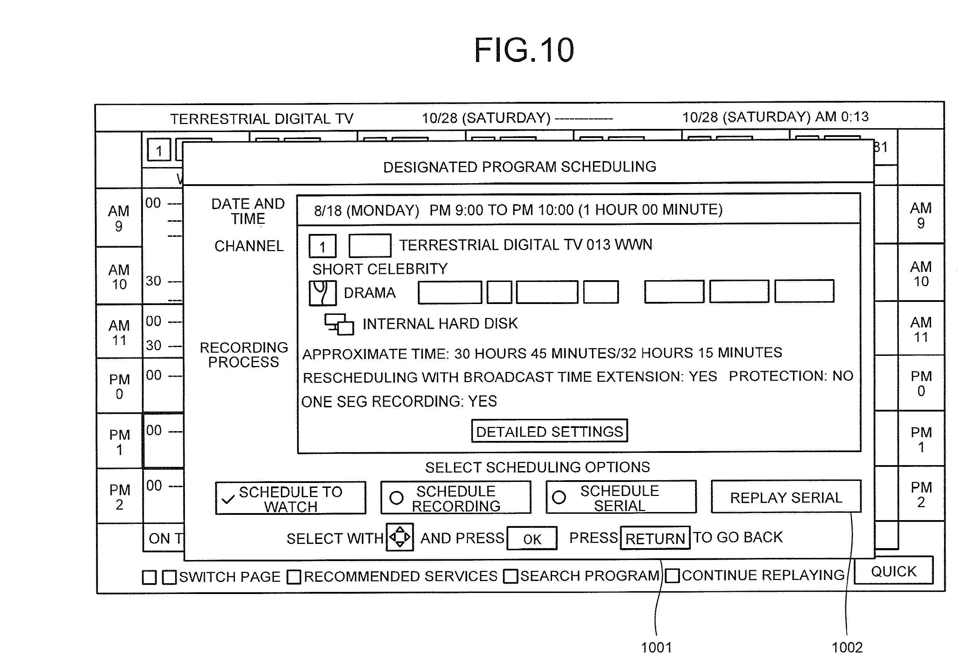

FIG. 10 is a schematic illustrating an example of a designated program scheduling screen 1001 displayed over the electrical program listings. The designated program scheduling screen 1001 illustrated in FIG. 10 displays detailed information of selected program content, and buttons such as "schedule watching", "schedule recording", "schedule serial", and "replay serial". When the selection receiver 104 receives a pressing operation on the button, the television display apparatus 100 performs an operation corresponding to the button. For example, if the selection receiver 104 receives a pressing operation on a "replay serial" button 1002, the display controller 103 controls to display the serial replay list.

A process of controlling to display the serial replay list is the same as the process for displaying the serial replay list from the past program listings. In this manner, the serial replay list illustrated in FIG. 8 is displayed.

In the television display apparatus 100 according to the embodiment, when any information related to a serial is not registered to the serial replay information storage 112, the registering module 102 registers the information read from the recorded content information storage 111 to the serial replay information storage 112 as the information related to the serial.

In other words, the extractor 101 extracts a serial name for identifying a serial that is a group of multiple pieces of program content from the program title identifying the program content.

The registering module 102 then registers the serial name extracted by the extractor 101, the program title indicating program content that belongs to the serial identified by the serial name, and the farthest position reached in the program content to the serial replay information storage 112 in an associated manner.

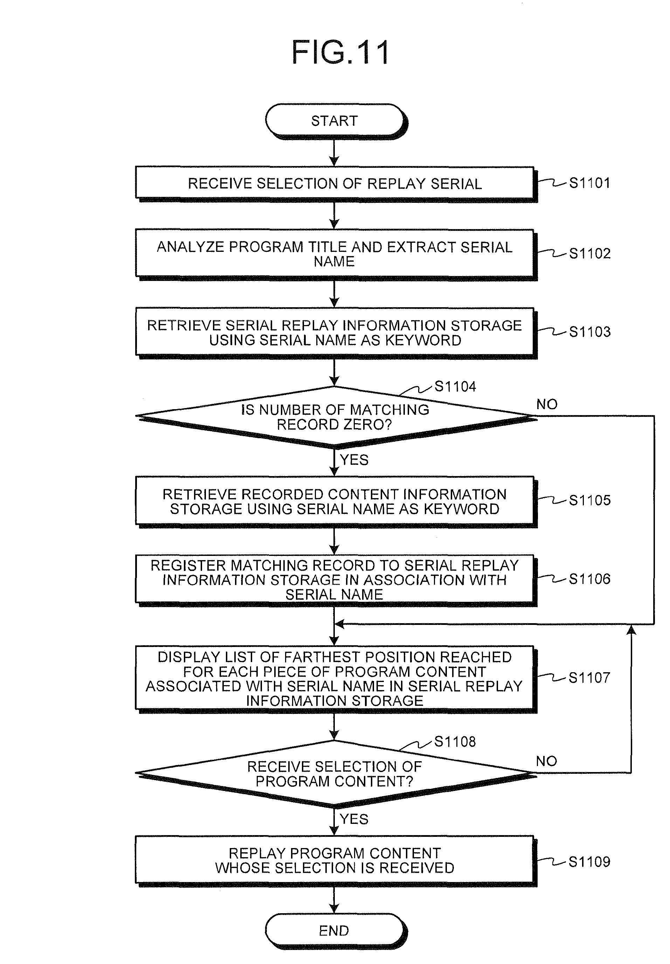

Explained below is a process from displaying the serial replay list to replaying the program content in the television display apparatus 100 according to the embodiment. FIG. 11 is a flowchart illustrating such a process in the television display apparatus 100 according to the embodiment.

To begin with, the selection receiver 104 receives a selection of the "replay serial" button from the designated program replay screen or the designated program scheduling screen that is controlled to be displayed by the display controller 103 (S1101).

The extractor 101 then analyzes the program title of the program content designated in the designated program replay screen or the designated program scheduling screen, and extracts the serial name (S1102). The display controller 103 then retrieves the serial replay information storage 112 using the serial name thus extracted as a keyword (S1103).

The display controller 103 then determines if the number of records having a matching serial name is "zero" (S1104) . If the number of records having a matching serial name is not "zero" (No at S1104), the system control goes to S1107.

By contrast, if the number of records having the matching serial name is "zero" (Yes at S1104), the display controller 103 retrieves for a record having a "program title" including the serial name, from the recorded content information storage 111 (S1105).

The registering module 102 then registers the "program title", the "start time", the "broadcast time frame", and "the farthest position reached" included in the record thus detected to the serial replay information storage 112 in a manner associated with the serial name and an index (S1106).

The display controller 103 then displays a list (serial replay list) indicating the farthest position reached for each piece of program content associated with the serial name in the serial replay information storage 112 (S1107).

The selection receiver 104 then receives a selection of program content to be replayed from the program content indicated in the serial replay list (S1108). If the selection receiver 104 does not receive any selection of program content (No at S1108), the display controller 103 continues to display the list displayed at S1107.

If the selection receiver 104 receives a selection of program content (Yes at S1108), the replay controller 105 replays the program content whose selection is received (S1109). At this time, the replay controller 105 starts replaying the program content from one of the beginning position of the program content, the farthest position reached, the resumed point at which replaying is stopped by a user operation, and ten seconds before the farthest position reached, based on a selected button.

With the process described above, a user can recognize how far the user has watched each piece of program content belonging to the same serial. Therefore, convenience in watching the program content belonging to the serial can be improved.

It is very likely that increasing capacity of storages and development of transcoding technologies will allow program content broadcasted by a plurality of broadcast stations to be recorded simultaneously over several weeks to several months. In such a case, if too many serials are recorded, a user might become unable to recognize how far in which episode of each serial the user has already watched.

In the television display apparatus 100 according to the embodiment, the farthest position reached can be visually recognized more easily for each piece of program content belonging to the same serial. In this manner, a user can recognize how far the user has watched each piece of the program content.

The display application 205d executed on the television display apparatus 100 according to the embodiment is provided in a manner recorded in a computer-readable recording medium such as a compact disk read-only memory (CD-ROM), a flexible disk (FD), a compact disk recordable (CD-R), or a digital versatile disk (DVD), as a file in an installable or an executable format.

Furthermore, the display application 205d executed on the television display apparatus 100 according to the embodiment may also be stored in a computer connected to a network such as the Internet and made available for download over the network. The display application 205d executed on the television display apparatus 100 according to the embodiment may be provided or distributed over a network such as the Internet.

Furthermore, the display application 205d according to the embodiment may be configured to be provided in a manner incorporated into a read only memory (ROM) and the like in advance.

The display application 205d executed on the television display apparatus 100 according to the embodiment has a modular structure comprising each of the modules explained above (the extractor, the registering module, the display controller, the selection receiver, and the replay controller). In the actual hardware, by causing a central processing unit (CPU) (processor) to read the display application 205d from the storage medium and to execute the display application 205d, each of the modules is loaded onto the RAM 205b, and the extractor, the registering module, the display controller, the selection receiver, and the replay controller are provided on the RAM 205b.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A content output apparatus comprising:
a storage (112) configured to store therein a serial identification information piece for identifying a serial that is a group of broadcast content pieces received from a broadcast station, content identification information piece for identifying each of the broadcast content pieces, and a farthest position reached indicating, for each of the broadcast content pieces, a position closest to an end of the corresponding broadcast content piece within a replayed portion of the corresponding broadcast content piece by a user operation, in association with each other; and
an output controller (103) configured to output the farthest position reached for each of the broadcast content pieces identified by the content identification information pieces stored in association with the serial identification information piece for identifying the serial that is selected in the storage (112) to a display.

2. The content output apparatus of Claim 1, further comprising:
a receiver (104) configured to receive a selection of the broadcast content piece whose farthest position reached is output by the output controller (103); and
a replay controller (105) configured to replay the broadcast content piece whose selection is received by the receiver (104).

3. The content output apparatus of Claim 2, wherein the replay controller (105) is configured to replay the broadcast content piece whose selection is received by the receiver (104) from one of a beginning position of the broadcast content piece, the farthest position reached of the broadcast content piece, a resumed position at which replaying is stopped by a user operation of the broadcast content piece, and a given time before the farthest position reached of the broadcast content piece.

4. The content output apparatus of any one of Claims 1 to 3, further comprising:
a content storage (111) configured to store therein the content identification information piece for identifying the broadcast content piece received from the broadcast station and the farthest position reached of the broadcast content piece in association with each other;
an extractor (101) configured to extract the serial identification information piece for identifying the serial that is the group of the broadcast content pieces from the content identification information pieces; and
a registering module (102) configured to register the serial identification information piece extracted by the extractor (101), the content identification information pieces indicating the broadcast content pieces belonging to the serial identified by the serial identification information piece, and the farthest positions reached of the broadcast content pieces to the storage (112) in association with each other.

5. A content output method comprising:
storing therein a serial identification information piece for identifying a serial that is a group of broadcast content pieces received from a broadcast station, content identification information piece for identifying each of the broadcast content pieces, and a farthest position reached indicating, for each of the broadcast content pieces, a position closest to an end of the corresponding broadcast content piece within a replayed portion of the corresponding broadcast content piece by a user operation, in association with each other; and
outputting the farthest position reached for each of the broadcast content pieces identified by the content identification information pieces stored in association with the serial identification information piece for identifying the serial that is selected to a display.
